# DEMANDE DE BREVET EUROPEEN

(11) **EP 1 731 413 A1**
(43) Date de publication de la demande: **13.12.2006**
(21) Numéro de dépôt: 06300573.0
(22) Date de dépôt: 09.06.2006
(51) Int. Cl.: B62D 65/14, B60K 35/00, H02B 1/048

(54) **Agencement pour la fixation sur une planche de bord d'un bloc d'instruments d'un véhicule automobile**

(30) Priorité: 09.06.2005 FR 0505849
(71) Demandeur: Renault SAS, 92100 Boulogne Billancourt (FR)
(72) Inventeur: Massa, Xavier, 95110, SANNOIS (FR); Saclier, Nils, 78490, GROSROUVRE (FR)

(57) **Abrégé**

L'invention propose un agencement (10) pour la fixation sur une planche de bord (12) d'un bloc d'instruments (14) d'un véhicule automobile s'étendant suivant trois directions longitudinale (Z), transversale (Y) et latérale (X), du type dans lequel la planche de bord (12) comporte un logement (16) conforme qui est destiné à recevoir le bloc d'instruments (14) du véhicule sensiblement suivant la direction longitudinale (Z), et du type qui comporte des moyens (23) de fixation rapide interposés entre le bloc d'instruments (14) et un pourtour (18) du logement (16), caractérisé en ce qu'il comporte des moyens rapides (20, 22) de mise en position isostatique du bloc (14) d'instruments suivant les trois directions longitudinale (Z), transversale (Y) et latérale (X) qui sont destinés à être mis en oeuvre préalablement à la mise en oeuvre des moyens (23) de fixation rapide.

## Description

L'invention concerne un agencement pour la fixation sur une planche de bord d'un bloc d'instruments d'un véhicule automobile s'étendant suivant trois directions longitudinale, transversale et latérale, du type dans lequel la planche de bord comporte un logement conforme qui est destiné à recevoir le bloc d'instruments du véhicule suivant la direction longitudinale, et du type qui comporte des moyens de fixation rapide interposés entre le bloc d'instruments et un pourtour du logement.

On connaît de nombreux exemples d'agencements de ce type.

Il s'agit par exemple d'agencements dans lesquels le bloc d'instruments comporte des languettes de fixation qui s'étendent suivant la direction longitudinale d'introduction et qui sont destinées à coopérer avec des languettes ou des orifices de réception portés par le pourtour du logement.

De tels agencements comportent généralement au moins trois languettes de fixation de ce type.

L'inconvénient de tels agencements est qu'il nécessaire, préalablement à l'engagement des languettes de fixation sur les languettes de réception ou dans les orifices de réception, de positionner de manière adéquate le bloc d'instruments. Cette mise en position doit être effectuée manuellement et est particulièrement délicate.

Pour remédier à cet inconvénient, une solution consiste à séparer les étapes de mise en position et de fixation en proposant un agencement qui permette dans un premier temps de mettre en position le bloc d'instruments, puis de le verrouiller dans son logement.

Dans ce but, l'invention propose un agencement du type décrit précédemment, caractérisé en ce qu'il comporte des moyens rapides de mise en position isostatique du bloc d'instruments suivant les trois directions longitudinale, transversale et latérale qui sont destinés à être mis en oeuvre préalablement à la mise en oeuvre des moyens de fixation rapide.

Selon d'autres caractéristiques de l'invention :
- les moyens rapides de mise en position isostatique du bloc d'instruments comportent :
   - Au moins un élément axial d'orientation transversale, qui est par porté un premier bord d'orientation transversale du bloc d'instruments, et qui est destiné à être reçu, sur des surfaces sécantes portées par le pourtour du logement, en appui suivant les directions longitudinale et latérale pour permettre de déposer le bloc d'instruments suivant un sens déterminé de la direction latérale et pour permettre d'assurer son appui suivant les directions longitudinale et latérale, puis de permettre le pivotement du bloc d'instruments autour de son élément axial sur lesdites surfaces,
   - un élément, qui est porté par un second bord transversal opposé du bloc d'instruments, qui s'étend sensiblement suivant la direction latérale, et qui est destiné, une fois que le bloc d'instruments a été pivoté autour de son élément axial, à être reçu dans une fente d'orientation latérale pratiquée dans le pourtour du logement qui est tournée vers le sens déterminé de la direction latérale pour immobiliser le bloc d'instruments suivant la direction transversale et dans le sens opposé au sens déterminé de la direction latérale,
- l'élément axial d'orientation transversale est constitué de deux tourillons d'orientation transversale qui s'étendent à l'opposé l'un de l'autre à partir des extrémités transversales opposées du premier bord transversal du bloc d'instruments,
- les surfaces sécantes comportent deux paires de parois sécantes, d'un écartement sensiblement correspondant à celui des tourillons, lesdites parois étant perpendiculaires aux directions longitudinale et latérale, et étant venues de matière avec le pourtour du logement,
- l'élément qui est porté par le second bord transversal du bloc d'instruments est constitué d'un doigt qui est venu de matière avec le bloc d'instruments et la fente est venue de matière avec la matériau de la planche de bord,
- les moyens de fixation rapide comportent deux pattes d'orientation latérale portées par les extrémités opposées du bord transversal opposé du bloc d'instruments dont des ergots d'extrémité d'orientation longitudinale sont destinés à être reçus dans des mors venus de matière avec le pourtour du logement.

L'invention concerne aussi un procédé d'assemblage d'un agencement caractérisé en ce qu'il comporte successivement :
- une première étape au cours de laquelle on approche les tourillons des surfaces sécantes en déplaçant le bloc d'instruments sensiblement suivant la direction latérale,
- une deuxième étape au cours de laquelle on fait reposer le bloc d'instruments par l'intermédiaire de ses tourillons sur les surfaces sécantes,
- une troisième étape au cours de laquelle on fait pivoter le bloc d'instruments en appui sur les surfaces sécants autour de l'axe transversal des tourillons de manière que le doigt pénètre dans la fente,
- une quatrième étape au cours de laquelle on pousse le second bord transversal du bloc d'instruments de manière que les ergots pénètrent dans les mors.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un agencement selon l'invention au cours de la première étape du procédé,
- la figure 2 est une vue en perspective de l'agencement de la figure 1 au cours de la deuxième étape du procédé,
- la figure 3 est une vue en perspective de l'agencement de la figure 1 au cours de la troisième étape du procédé.

Dans la description qui va suivre, des chiffres de référence identiques désignent des pièces identiques ou ayant des fonctions similaires.

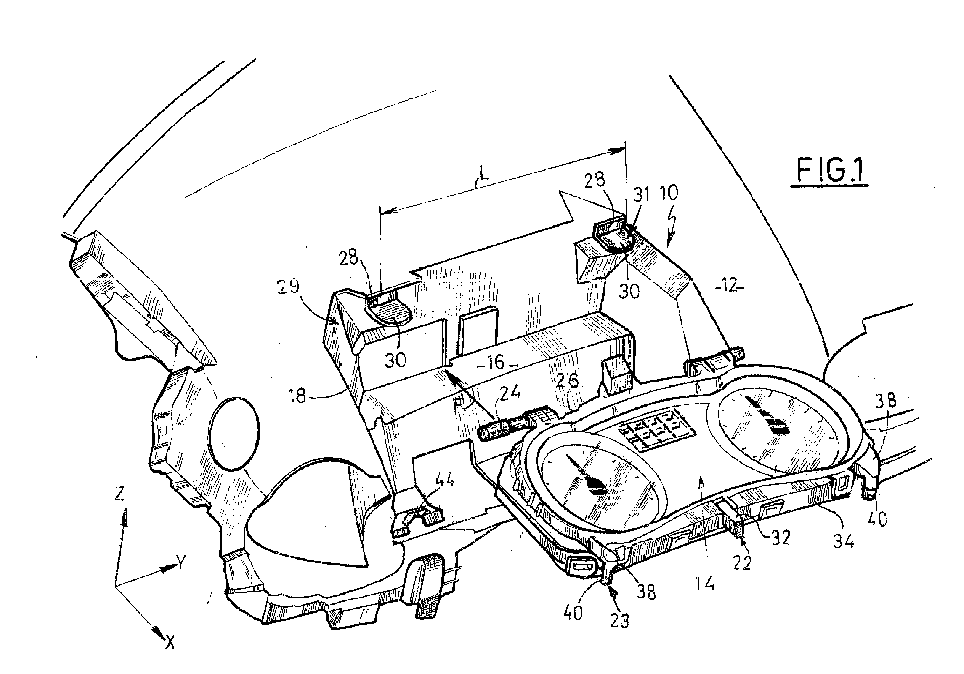

On a représenté à la figure 1 l'ensemble d'un agencement 10 pour la fixation sur une planche de bord 12 d'un bloc d'instruments 14 d'un véhicule automobile s'étendant suivant trois directions longitudinale "Z", transversale "Y" et latérale "X".

De manière connue, la planche de bord 12 comporte un logement 16 conforme qui est destiné à recevoir le bloc d'instruments du véhicule suivant la direction longitudinale au travers d'un pourtour 18 dudit logement 16.

Un agencement 10 de ce type connu de l'état de la technique (non représenté) comporte des moyens de fixation rapide interposés entre le bloc d'instruments 14 et le pourtour 18 du logement 16.

Conventionnellement, ces moyens de fixation rapide comportent au moins trois languettes de fixation (non représentées) qui s'étendent suivant la direction longitudinale "Z" d'introduction et qui sont destinées à coopérer avec des languettes ou des orifices de réception portées par le pourtour 18 du logement 16.

L'inconvénient de tels moyens de fixation est qu'il nécessaire, préalablement à l'engagement des languettes de fixation sur les languettes de réception ou dans les orifices de réception, de positionner de manière adéquate le bloc d'instruments 14. Cette mise en position doit être effectuée manuellement et est particulièrement délicate.

L'invention remédie à cet inconvénient en proposant un agencement 10 qui peut être assemblé en séparant les étapes de mise en position et de fixation.

A cet effet, l'invention propose un agencement 10 du type décrit précédemment, caractérisé en ce qu'il comporte des moyens rapides 20, 22 de mise en position isostatique du bloc d'instruments 14 suivant les trois directions longitudinale "Z", transversale "Y" et latérale "X" qui sont destinés à être mis en oeuvre préalablement à la mise en oeuvre des moyens 23 de fixation rapide.

Plus particulièrement, les moyens rapides 20, 22 de mise en position isostatique du bloc 14 d'instruments comportent au moins un élément 24 axial d'orientation transversale, qui est porté un premier bord 26 d'orientation transversale du bloc d'instruments 14, et qui est destiné à être reçu, sur des surfaces sécantes 28, 30 portées par le pourtour 18 du logement, en appui suivant les directions longitudinale "Z" et latérale "X" pour permettre de déposer le bloc d'instruments 14 suivant un sens déterminé de la direction latérale, comme représenté par la flèche "F" de la figure 1, et pour permettre d'assurer son appui suivant les directions longitudinale "Z" et latérale "X", puis de permettre le pivotement du bloc d'instruments autour de son élément axial 24 sur lesdites surfaces 28,30.

Plus particulièrement, l'au moins un élément 24 axial d'orientation transversale est constitué de deux tourillons 24 d'orientation transversale qui s'étendent à l'opposé l'un de l'autre à partir des extrémités transversales opposées du premier bord transversal 26 du bloc 14 d'instruments.

Par ailleurs, les surfaces sécantes comportent deux paires 29, 31 de parois sécantes 28, 30, d'un écartement "L" sensiblement correspondant à celui des tourillons.

Avantageusement, les parois 28, 30 sont perpendiculaires aux directions longitudinale "Z" et latérale "X", et elle sont venues de matière avec le pourtour 18 du logement 16. Cette conception est particulière avantageuse lorsque la planche de bord 12 et logement 16 sont réalisé par moulage d'un matériau plastique.

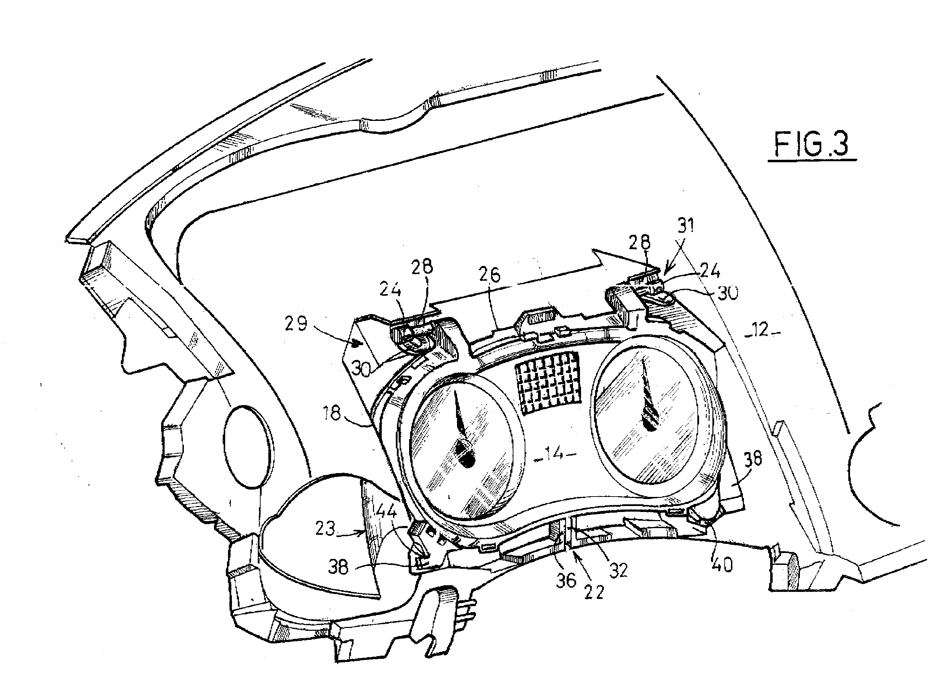

Les moyens rapides 20, 22 de mise en position isostatique du bloc 14 d'instruments comportent aussi un élément 32, qui est porté par un second bord 34 transversal opposé du bloc 14 d'instruments, qui s'étend sensiblement suivant la direction latérale "X', et qui est destiné, une fois que le bloc d'instruments a été pivoté autour de son élément axial comme représenté à la figure 3, à être reçu dans une fente 36 d'orientation latérale pratiquée dans le pourtour 18 du logement 16.

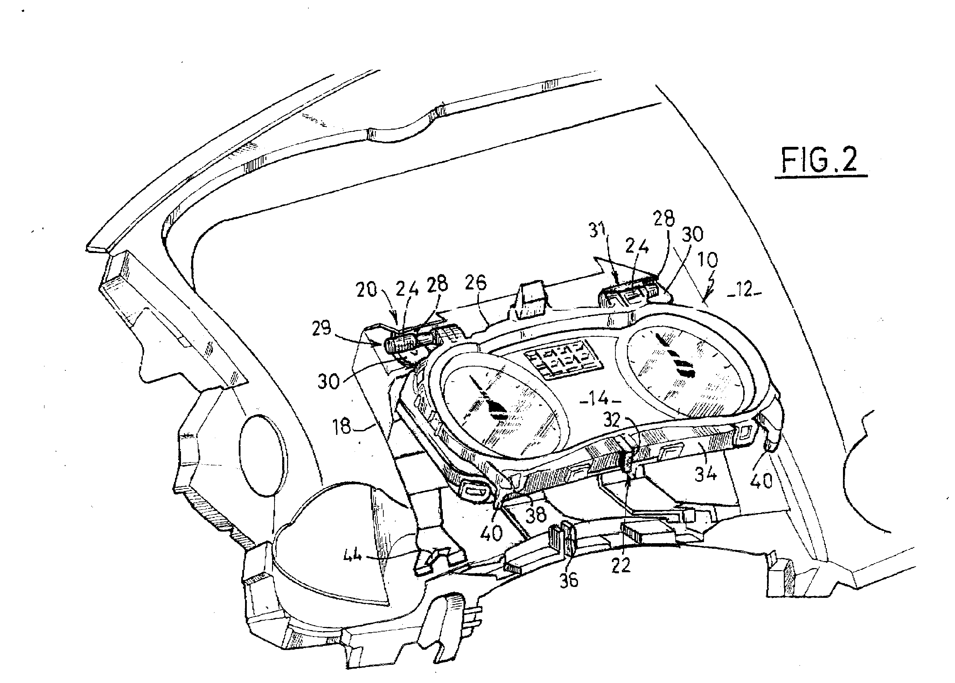

Plus particulièrement, comme l'illustrent les figures 2 et 3 cette fente 36 est sensiblement tournée vers le sens déterminé de la direction latérale "X" pour immobiliser 14 le bloc d'instruments suivant la direction transversale "Y" et dans le sens opposé au sens déterminé de la direction latérale "X".

Plus particulièrement, l'élément 32 qui est porté par le second bord 34 transversal du bloc 14 d'instruments est constitué d'un doigt 32 qui est venu de matière avec le bloc 14 d'instruments.

Avantageusement, d'une manière analogue aux surfaces sécantes 28, 30, la fente 36 est venue de matière avec le matériau de la planche 12 de bord.

Enfin, les moyens 23 de fixation rapide comportent deux pattes 38 d'orientation latérale portées par les extrémités opposées du bord transversal 34 opposé du bloc 14 d'instruments dont des ergots 40 d'extrémité d'orientation longitudinale sont destinés à être reçus dans des mors 44 venus de matière avec le pourtour 18 du logement 16.

Dans un mode de réalisation préféré de l'invention, les mors 44 sont par exemple munis de crochets tournés vers l'intérieur pour retenir les ergots 40. Les mors sont alors appelés "têtes de vipère".

Dans cette configuration, un procédé d'assemblage d'un agencement 10 du type décrit précédemment comporte une première étape au cours de laquelle on approche les tourillons 24 des surfaces sécantes 28, 30 en déplaçant le bloc 14 d'instruments sensiblement suivant la direction latérale.

Puis, au cours d'une deuxième étape, on fait reposer le bloc d'instruments 14 par l'intermédiaire de ses tourillons 24 sur les surfaces 28, 30 sécantes. De cette manière, les surfaces 28,30 sécantes déterminent un palier virtuel de pivotement des tourillons.

Puis, au cours d'une troisième étape, on fait pivoter le bloc d'instruments, autour de ce palier virtuel, en appui sur les surfaces sécantes 28, 30 autour de l'axe transversal des tourillons 24 de manière que le doigt 32 pénètre dans la fente 36.

De cette manière, le bloc d'instruments 14 se retrouve en appui isostatique sur les surfaces 28, 30 par l'intermédiaire des tourillons 24 et dans la fente 36 par l'intermédiaire du doigt 32.

Enfin, au cours d'une quatrième étape, on pousse le second bord 34 transversal du bloc 14 d'instruments de manière que les ergots 40 pénètrent dans les mors 44, pour verrouiller le bloc 14 d'instruments dans le logement 16.

L'invention permet donc de mettre en place de manière simple un bloc d'instruments 14 sur une planche de bord 12, et de verrouiller rapidement ce bloc d'instruments 14 sur ladite planche de bord 12.

## Revendications

1. Agencement (10) pour la fixation sur une planche de bord (12) d'un bloc d'instruments (14) d'un véhicule automobile s'étendant suivant trois directions longitudinale (Z), transversale (Y) et latérale (X), du type dans lequel la planche de bord (12) comporte un logement (16) conforme qui est destiné à recevoir le bloc d'instruments (14) du véhicule sensiblement suivant la direction longitudinale (Z), et du type qui comporte des moyens (23) de fixation rapide interposés entre le bloc d'instruments (14) et un pourtour (18) du logement (16), du type qui comporte des moyens rapides (20, 22) de mise en position isostatique du bloc (14) d'instruments suivant les trois directions longitudinale (Z), transversale (Y) et latérale (X) qui sont destinés à être mis en oeuvre préalablement à la mise en oeuvre des moyens (23) de fixation rapide,
**caractérisé en ce que** les moyens rapides (20, 22) de mise en position isostatique du bloc (14) d'instruments comportent :
- au moins un élément (24) axial d'orientation transversale, qui est porté par un premier bord (26) d'orientation transversale du bloc d'instruments (14), et qui est destiné à être reçu, sur des surfaces sécantes (28, 30) portées par le pourtour (18) du logement (16), en appui suivant les directions longitudinale (Z) et latérale (X) pour permettre de déposer le bloc d'instruments (14) suivant un sens déterminé de la direction latérale (X) et pour permettre d'assurer son appui suivant les directions longitudinale (Z) et latérale (X), puis de permettre le pivotement du bloc d'instruments (14) autour de son élément (24) axial sur lesdites surfaces (28,30),
- un élément (32), qui est porté par un second bord transversal opposé (34) du bloc (14) d'instruments, qui s'étend sensiblement suivant la direction latérale (X), et qui est destiné, une fois que le bloc d'instruments (14) a été pivoté autour de son élément axial (24), à être reçu dans une fente (36) d'orientation latérale pratiquée dans le pourtour (18) du logement (16) qui est tournée vers le sens déterminé de la direction latérale (X) pour immobiliser le bloc d'instruments (14) suivant la direction transversale (Y) et dans le sens opposé au sens déterminé de la direction latérale (X).

2. Agencement (10) selon la revendication précédente, **caractérisé en ce que** l'élément (24) axial d'orientation transversale est constitué de deux tourillons (24) d'orientation transversale qui s'étendent à l'opposé l'un de l'autre à partir des extrémités transversales opposées du premier bord transversal (26) du bloc (14) d'instruments.

3. Agencement (10) selon l'une des revendications 1 ou 2, **caractérisé en ce que** les surfaces sécantes comportent deux paires (29, 31) de parois sécantes (28, 30), d'un écartement (L) sensiblement correspondant à celui des tourillons (24), lesdites parois (28, 30) étant perpendiculaires aux directions longitudinale (Z) et latérale (X), et étant venues de matière avec le pourtour (18) du logement (16).

4. Agencement (10) selon l'une quelconque des revendications 1 à 3, **caractérisé en ce que** l'élément (32) qui est porté par le second bord (34) transversal du bloc (14) d'instruments est constitué d'un doigt (32) qui est venu de matière avec le bloc d'instruments (14) et **en ce que** la fente (36) est venue de matière avec la matériau de la planche de bord (12).

5. Agencement (10) selon l'une quelconque des revendications précédentes **caractérisé en ce que** les moyens (24) de fixation rapide comportent deux pattes (38) d'orientation latérale portées par les extrémités opposées du bord (34) transversal opposé du bloc d'instruments (14) dont des ergots (40) d'extrémité d'orientation longitudinale sont destinés à être reçus dans des mors (44) venus de matière avec le pourtour (18) du logement (16).

6. Procédé d'assemblage d'un agencement (10) selon les revendications 1 à 5 prises en combinaison, **caractérisé en ce qu'**il comporte successivement :
- une première étape au cours de laquelle on approche les tourillons (24) des surfaces sécantes (28, 30) en déplaçant le bloc d'instruments (14) sensiblement suivant la direction latérale (X),
- une deuxième étape au cours de laquelle on fait reposer le bloc d'instruments (14) par l'intermédiaire de ses tourillons (24) sur les surfaces sécantes (28, 30),
- une troisième étape au cours de laquelle on fait pivoter le bloc d'instruments (14) en appui sur les surfaces sécantes (28, 30) autour de l'axe transversal des tourillons (14) de manière que le doigt (32) pénètre dans la fente (36),
- une quatrième étape au cours de laquelle on pousse le second bord (34) transversal du bloc d'instruments (14) de manière que les ergots (40) pénètrent dans les mors (44).
